(19) Europäisches Patentamt

European Patent Office

Office européen des brevets

(11) **EP 4 549 173 A1**

(12) **EUROPEAN PATENT APPLICATION**

(43) Date of publication:
07.05.2025 Bulletin 2025/19

(21) Application number: 23207997.0

(22) Date of filing: 06.11.2023

(51) International Patent Classification (IPC):
*B60C 23/04* *(2006.01)*

(52) Cooperative Patent Classification (CPC):
B60C 23/0476

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **VOLVO TRUCK CORPORATION**
**405 08 Göteborg (SE)**

(72) Inventors:
• **CIDER, Lennart**
**441 95 ALINGSÅS (SE)**
• **PETTERSSON, Emil**
**449 43 NOL (SE)**

(74) Representative: **Kransell & Wennborg KB**
**P.O. Box 2096**
**403 12 Göteborg (SE)**

(54) **GAS LEAKAGE DETECTION IN A VEHICLE TIRE**

(57) The present disclosure relates to a computer system comprising processing circuitry configured to determine that a gas leakage is present in a vehicle tire in response to a difference between a first value indicative of a gas amount in the vehicle tire at a first point in time, and second value indicative of a gas amount in the vehicle tire at a second point in time being above a predetermined threshold limit, and transmit data to perform a responsive action in response to the determined gas leakage.

*Fig. 2*

Processed by Luminess, 75001 PARIS (FR)

Description

## TECHNICAL FIELD

The disclosure relates generally to vehicle tires. In particular aspects, the disclosure relates to gas leakage detection in a vehicle tire. The disclosure can be applied to heavy-duty vehicles, such as trucks, buses, and construction equipment, among other vehicle types. Although the disclosure may be described with respect to a particular vehicle, the disclosure is not restricted to any particular vehicle.

## BACKGROUND

Air leakage from a vehicle tire presents a critical issue that encompasses various ramifications for both the vehicle's performance and safety. The fundamental consequence of such leakage is the gradual reduction of tire pressure. This reduction, if left unaddressed, can profoundly affect the vehicle's handling characteristics and operational efficiency.

In addition, air leakage may negatively affect the rolling resistance of the wheel of the vehicle. In particular, a deflated tire may increase the rolling resistance of the vehicle which in turn increases the fuel consumption for a vehicle propelled by an internal combustion engine, or increases the power consumption for a vehicle propelled by an electric traction motor. In fact, it has been realized that the rolling resistance may affect the efficiency of the vehicle to a larger extent than e.g. the vehicle's aerodynamic properties.

Air leakage may however be unavoidable and there is thus a desire to improve the detection of such air leakage to be able to take a correct action well in time before the damage is too severe.

## SUMMARY

According to a first aspect of the disclosure, there is provided a computer system comprising processing circuitry configured to: receive sensor data of a first gas pressure level and a first gas temperature level of a gas in a vehicle tire at a first point in time, calculate a first value indicative of a gas amount contained in the tire at the first point in time, the first value being calculated in response to the first gas pressure level and the first gas temperature level, receive sensor data of a second gas pressure level and a second gas temperature level of the gas in the vehicle tire at a second point in time, the second point in time being subsequent to the first point in time, calculate a second value indicative of a gas amount contained in the tire at the second point in time, the second value being calculated in response to the second gas pressure level and the second gas temperature level, determine that a gas leakage is present in the vehicle tire in response to a difference between the first and second values being above a predetermined threshold limit, and transmit data to perform a responsive action in response to the determined gas leakage.

The first aspect of the disclosure may seek to mitigate the problem of quickly detecting gas leakage in a vehicle tire, and to also be detect minor gas leakage which has been difficult with prior solutions. A technical benefit may thus include that a rapid detection of gas leakage in a vehicle tire is provided, irrespective of the magnitude of the gas leakage. In addition, a suitable responsive action may be taken in response to a determined gas leakage. By taking a responsive action, the rolling resistance for the vehicle can be kept low during operation of the vehicle which will in turn provide for an overall improved efficiency for the vehicle.

It has been realized that prior conventional gas leakage detection that relies on e.g. solely on changes in gas pressure in the tire is less keen to detect a gas leakage in a rapid manner. In particular, for minor gas leakage, a change in gas pressure may not be detected fast enough, in particular since the gas pressure level changes as the temperature changes. Accordingly, when the temperature level is reduced it can be difficult to solely relying on changes in gas pressure to detect a gas leakage.

The present disclosure is based on the insight that the gas in the vehicle tire can be considered to follow the ideal gas law. Thus, the gas temperature and the gas pressure within the tire can be considered proportional to each other since changes in the gas volume can be considered negligible. Also, for a non-leaking vehicle tire, it can be assumed that the gas amount will not change. Hereby, calculating the above described first and second values indicative of the gas amount contained in the tire at two distinct points in time can cause the processing circuitry to detect gas leakage if the values differ too much. For example, if a gas leakage is present, the temperature level may not continue to be proportional to the reduction of gas pressure, whereby a rapid detection of the gas leakage can be provided.

Since the gas volume in the tire is considered negligible, the first and second values may be construed as indicative of the gas amount in the tire as the respective calculated values will be used for comparison to each other, i.e. when comparing the first and second values.

Optionally in some examples, including in at least one preferred example, the processing circuitry is configured to receive the sensor data at the second point in time at a predetermined time difference from the first point in time. A technical benefit may include that two distinct points in time are used for detecting gas leakage. The predetermined time difference may however be set to a low time difference. In detail, the time difference may be incremental. The processing circuitry may also, as will be evident from the below description, be configured to continuously detect gas leakage by continuously calculating an updated value, i.e. a second value, indicative of a gas amount in the vehicle tire. A sudden change, i.e. when deviating from a previous calculation, i.e. from a calculation of the first value, an air gas leakage may be detected.

Optionally in some examples, including in at least one preferred example, the gas amount at the first point in time being a first number of gas molecules contained in the vehicle tire, and the gas amount at the second point in time being a second number of gas molecules contained in the vehicle tire. The first and second numbers of gas molecules may also be referred to as the first and second number of moles of the gas contained in the vehicle tire.

Optionally in some examples, including in at least one preferred example, the processing circuitry is configured to determine that a gas leakage is present in the vehicle tire in response to the second value being lower than the first value by the predetermined threshold limit. As indicated above, the gas temperature level may not follow a reduction in a proportional manner as the reduction in gas pressure during gas leakage. The second value may be therefore, when the gas follows the ideal gas law, be lower than the first value during gas leakage in the vehicle tire. It should however be readily understood that if the second value is suddenly higher than the first value by the predetermined threshold limit, there might be another fault of the vehicle tire, whereby a responsive action should be taken.

Optionally in some examples, including in at least one preferred example, the processing circuitry is configured to continuously receive the sensor data for a predetermined time period of operation of a vehicle provided with the vehicle tire.

Optionally in some examples, including in at least one preferred example, the second point in time is an instant point in time subsequent to the first point in time, the processing circuitry being configured to determine that the gas leakage is present in the vehicle tire in response to a sudden difference between the first and second values being above the predetermined threshold limit. A technical benefit may include that a continuous detection may rapidly detect a gas leakage. The sudden difference is thus an instant change in the value indicative of the gas amount which can be detected during a continuous detection of gas temperature and gas pressure. Accordingly, during operation of the vehicle, the second value will in a subsequent time instant be the first value in the calculation and comparison between the values.

Optionally in some examples, including in at least one preferred example, the processing circuitry is configured to transmit a responsive action in the form of transmitting an alarm message to a display arranged inside a vehicle provided with the vehicle tire. A technical benefit may include that an operator of the vehicle may be rapidly informed that a gas leakage is present.

Optionally in some examples, including in at least one preferred example, the alarm message causes the display to indicate a maintenance event to the operator of the vehicle in response to the difference between the first and second values being within a first predetermined range above the predetermined threshold limit. A technical benefit may include that a distinct instruction is presented to the operator. Hereby, the operator may continue the mission and subsequently drive the vehicle for maintenance.

Optionally in some examples, including in at least one preferred example, the alarm message causes the display to indicate a vehicle stop event to the operator of the vehicle in response to the difference between the first and second values being above the first predetermined range above the predetermined threshold limit. A technical benefit may include that the operator will be instructed to not drive the vehicle further as this may be hazardous.

The disclosure may also be applicable for autonomous vehicles, whereby the responsive action can be transmitted to a vehicle control unit. The vehicle control unit may hereby be controlled, in response to the responsive action, cause the vehicle to be operated as instructed by the responsive action. For example, when the difference between the first and second values is within the first predetermined range above the predetermined threshold limit, the vehicle may be autonomously driven to for maintenance. When e.g. the difference between the first and second values is above the first predetermined range above the predetermined threshold limit, the vehicle may be autonomously controlled to be driven to the side of the road, and an automated alarm message may be sent to a towing vehicle.

According to a second aspect, there is provided a vehicle comprising the computer system of any of the examples described above in relation to the first aspect.

Optionally in some examples, including in at least one preferred example, the sensor data is received from at least one sensor connected to the vehicle tire. A technical benefit may include that correct and reliable data is transmitted to the processing circuity in a rapid, i.e. instant, manner.

Optionally in some examples, including in at least one preferred example, the at least one sensor is a pressure sensor and a temperature sensor. The at least one sensor may alternatively be a single sensor configured to both detect gas pressure and gas temperature in the vehicle tire.

Further effects and features of the second aspect are largely analogous to those described above in relation to the first aspect.

According to a third aspect, there is provided a computer-implemented method, comprising: determining, by processing circuitry of a computer system, a first gas pressure level and a first gas temperature level of a gas in a vehicle tire at a first point in time, calculating, by the processing circuitry, a first value indicative of a gas amount contained in the tire at the first point in time, the first value being calculated in response to the first gas pressure level and the first gas temperature level, determining, by the processing circuitry, a second gas pressure level and a second gas temperature level of the gas in the vehicle tire at a second point in time, the second point in time being subsequent to the first point in time, calculating, by the processing circuitry, a second value indicative of a gas amount contained in the tire at the second point in time, the second value being calculated in response to the second gas pressure level and the second gas temperature level, determining, by the processing circuitry, that a gas leakage is present in the vehicle tire in response to a difference between the first and second values being above a predetermined threshold limit, and transmitting, by the processing circuitry, data to perform a responsive action in response to the determined gas leakage.

Effects and features of the third aspect are largely analogous to those described above in relation to the first aspect. Thus, the features described above in relation to the first aspect can also be combinable with the features of the third aspect.

According to a fourth aspect, there is provided a computer program product comprising program code for performing, when executed by the processing circuitry, the method of the third aspect.

According to a fifth aspect, there is provided a non-transitory computer-readable storage medium comprising instructions, which when executed by the processing circuitry, cause the processing circuitry to perform the method of the third aspect.

Effects and features of the fourth and fifth aspects are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

Fig. 1 is an exemplary illustration of a vehicle according to an example,
Fig. 2 is an exemplary illustration of a vehicle tire according to an example,
Fig. 3 is a flow chart of a method according to an example, and
Fig. 4 is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

The disclosure described in the following may seek to rapidly detect gas leakage in a vehicle tire. The present disclosure described in the following may additionally rapidly detect minor gas leakage in the vehicle tire. Further, in response to the detected gas leakage, the present disclosure can take an advantageous and suitable responsive action.

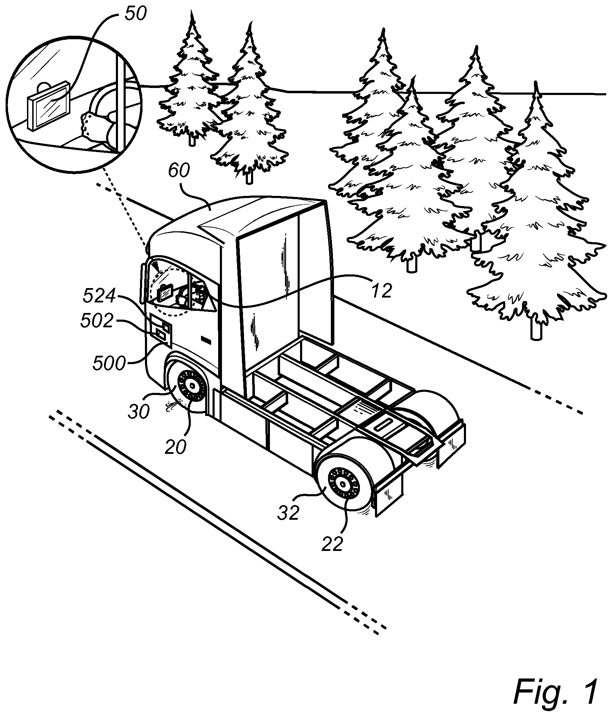

Reference is initially made to Fig. 1 which is an exemplary illustration of a vehicle 10 according to an example. The vehicle 10 is exemplified as a truck operated by a driver 12. Alternatively, the vehicle 10 may however be an autonomous vehicle 10 which does not rely on an operator for steering and controlling the vehicle speed. The exemplified vehicle 10 comprises a pair of front wheels 20 and a pair of rear wheels 22. Each of the wheels is provided with a gas inflated vehicle tire 30, 32. The gas is preferably air, which is inflated into the tire 30, 32 to obtain a desired gas pressure within the tire during operation of the vehicle. Even if the exemplified truck in Fig. 1 solely comprises two pair of wheels, it should be readily understood that other types of vehicles form part of the present disclosure. The towing vehicle 10 depicted in Fig. 1 may alternatively comprise two pair of rear wheels. Also, the vehicle 10 may be a truck provided with one or more trailer units connected to the towing vehicle 10. Also, a dolly may be arranged between e.g. the towing vehicle 10 a trailer unit. The vehicle 10 may also comprise one or more liftable wheel axle, where the wheels of such axle can be lifted above ground level during operation. Accordingly, when in the following describing gas leakage detection, it should be readily understood that this can be made for each of the vehicle tires provided to the particular type of vehicle 10 using the exemplified system.

The vehicle 10 also comprises a computer system 500. The computer system 500 comprises processing circuitry 502 configured to control various operations as will be evident from the below description. The computer system 500 preferably also comprises an output device interface 524 which is configured to forward output to a display 50 arranged inside a cabin 60 of the vehicle 10.

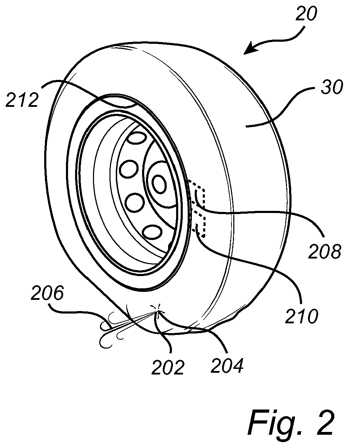

With reference to Fig. 2, which illustrates a gas leakage 202 in the vehicle tire 30. The exemplified gas leakage 202 is caused by a small hole 204 in the vehicle tire 30 such that gas 206 is leaking from the inside of the tire 30 to the ambient environment. A gas leakage 202 may obviously occur at other positions of the tire compared to the illustration in Fig. 2, and for various reasons. Further, the vehicle tire 30 may advantageously be provided with at least one sensor 208, 210. The at least one sensor 208, 210 is preferably connected to the vehicle tire 30, or connected to the rim 212 of the wheel 20 for detecting gas pressure and gas temperature inside the vehicle tire 30. For illustrative purposes, the exemplified at least one sensor is in Fig. 2 a pressure sensor 208 and a temperature sensor 210. The at least one sensor may however also be one sensor configured to detect gas pressure and gas temperature inside the vehicle tire 30.

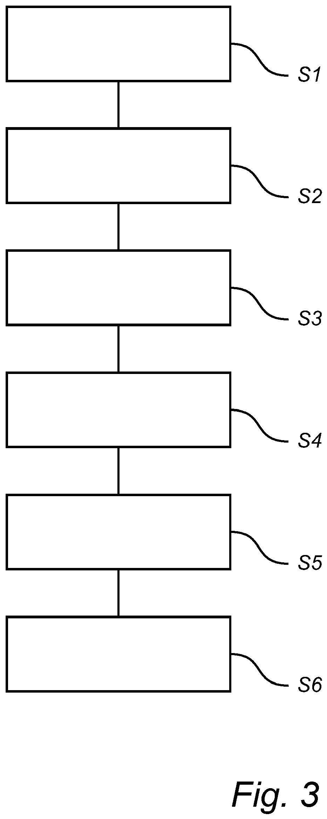

Reference is now made to Fig. 2 in combination with Fig. 3 to describe examples of detecting gas leakage 202 in the vehicle tire 30, and the responsive actions to take in response to a detected gas leakage.

During operation of the vehicle, the gas pressure P and the gas temperature T follow each other in a more or less proportional manner for a non-leaking vehicle tire. The ratio between gas pressure P and gas temperature T is, for a non-leakage vehicle tire substantially constant over time When the vehicle is in operation, the processing circuitry receives S 1 sensor data of a first gas pressure level and a first gas temperature level of the gas in the vehicle tire 30 at a first point in time ti. The sensor data may preferably be received continuously. The sensor data may preferably be received from the at least one sensor 208, 210 described above in relation to Fig. 2. In response to the first gas pressure level and the first gas temperature level, a first value indicative of a gas amount n contained in the vehicle tire 30 at the first point in time ti is calculated S2. In particular, equation 1 below is preferably used by the processing circuitry 502 calculating the first value.

$$p_1 \times V_1 = n_1 \times R \times T_1 \qquad (1)$$

Where:

pi = First gas pressure level at the first point in time,
Vi = Volume of gas in the vehicle tire at the first point in time,
ni = gas amount at the first point in time,
R = ideal gas constant, and
$T_1$ = first gas temperature at the first point in time.

Using equation 1, the first value indicative of a gas amount contained in the vehicle tire 30 can be formulated by equation 2 below.

$$\frac{n_1 \times R}{V_1} = \frac{p_1}{T_1} \qquad (2)$$

The volume of gas Vi in the vehicle tire 30 is considered constant over time, at least for the purpose of detecting gas leakage. Also, the ideal gas constant R is also constant. Thus, the definition in equation 2 is considered to represent a first value indicative of the gas amount contained in the tire at the first point in time.

Subsequently, the processing circuitry 502 receives S3 sensor data, preferably from the at least one sensor 208, 210 in Fig. 2, of a second gas pressure level and a second gas temperature level of the gas in the vehicle tire at a second point in time $t_2$. The second gas pressure level is in the exemplification reduced compared to the first gas pressure level, while the second gas temperature level is slightly increased compared to the first gas temperature level. Using equation 1 above, the processing circuitry 502 calculates S4 a second value indicative of a gas amount contained in the tire 30 at the second point in time $t_2$. Equation 3 below presents details of the calculation of the second value.

$$\frac{n_2 \times R}{V_2} = \frac{p_2}{T_2} \qquad (3)$$

Where:

$p_2$ = Second gas pressure level at the second point in time,
$V_2$ = Volume of gas in the vehicle tire at the second point in time,
$n_2$ = gas amount at the second point in time,
R = ideal gas constant, and
$T_2$ = second gas temperature at the second point in time.

As described above, the volume of gas in the vehicle tire can be considered a constant value. The first and second values indicative of a gas amount contained in the vehicle tire 30 can thus be compared to each other as the volume of gas is constant. In detail, the processing circuitry 502 advantageously determines S5 that a gas leakage 202 is present in the vehicle tire 30 in response to a difference between the first and second values being above a predetermined threshold limit. Hence, a deviation in the ratio between gas pressure P and gas temperature T is detected. The temperature level in the vehicle tire may not be affected by a gas leakage, but where the gas pressure level is affected by such leakage, and a gas leakage 202 can hereby be detected in a rapid and reliable manner.

Advantageously, the gas amount at the first point in time ti is preferably a first number of gas molecules contained in the vehicle tire 30. In a similar vein, the gas amount at the second point in time $t_2$ is preferably a second number of gas molecules contained in the vehicle tire 30. Also, when comparing the first and second levels of gas contained in the vehicle tire 30, the processing circuitry 502 may advantageously determine that a gas leakage 202 is present in the vehicle tire 30 when the second value is lower than the first value by the predetermined threshold limit.

Also, and as indicated above, the processing circuitry 502 may continuously receive sensor data whereby a sudden change in the value indicative of the gas amount in the vehicle tire 30 may indicate a gas leakage 202.

When a gas leakage is detected, the processing circuitry 502 advantageously transmit S6 data to perform a responsive action. According to a non-limiting example, the processing circuitry 502 may transmit a responsive action in the form of an alarm message to the display 50 in the vehicle cabin 60 depicted in Fig. 1. Hereby, the operator 12 of the vehicle 10 can be made aware of the gas leakage 202. As an alternative, the alarm message may cause the display 50 to indicate a maintenance event to the operator of the vehicle if the difference between the first and second values is within a first predetermined range above the predetermined threshold limit. The first predetermined range should thus be understood as a change in gas amount which is not of such magnitude that the vehicle 10 should stop immediately.

However, if the difference between the first and second values is above the first predetermined range, i.e. higher than the upper value of the first predetermined range, the alarm message may advantageously cause the display 50 to indicate a vehicle stop event to the operator 12 of the vehicle 10. Hence, if the leakage 202 is of such magnitude that it is hazardous to continue operation of the vehicle 10, the operator 12 is informed that he/she should stop the vehicle 10 as soon as possible.

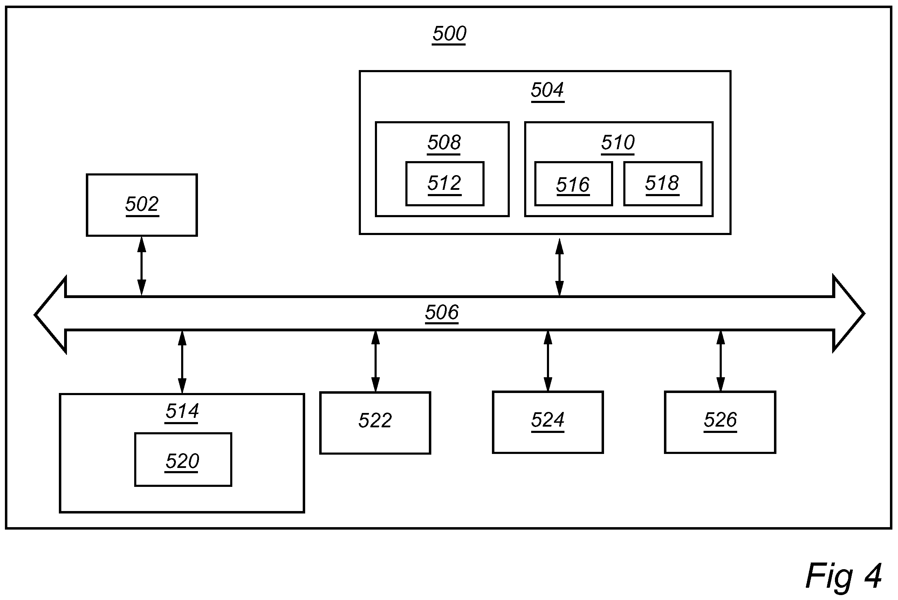

Fig. 4 is a schematic diagram of a computer system 500 for implementing examples disclosed herein. The computer system 500 is adapted to execute instructions from a computer-readable medium to perform these and/or any of the functions or processing described herein. The computer system 500 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include processing circuitry 502 (e.g., processing circuitry including one or more processor devices or control units), a memory 504, and a system bus 506. The computer system 500 may include at least one computing device having the processing circuitry 502. The system bus 506 provides an interface for system components including, but not limited to, the memory 504 and the processing circuitry 502. The processing circuitry 502 may include any number of hardware components for conducting data or signal processing or for executing computer code stored in memory 504. The processing circuitry 502 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 502 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with processing circuitry 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 502 to carry out actions described herein. Thus, the computer-readable program code of the computer program 520 can comprise software instructions for implementing the functionality of the examples described herein when executed by the processing circuitry 502. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 502. The processing circuitry 502 may serve as a controller or control system for the computer system 500 that is to implement the functionality described herein.

The computer system 500 may include an input device interface 522 configured to receive input and selections to be communicated to the computer system 500 when executing instructions, such as from a keyboard, mouse, touch-sensitive surface, etc. Such input devices may be connected to the processing circuitry 502 through the input device interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

**EXAMPLE LIST**

Example 1. A computer system comprising processing circuitry configured to receive sensor data of a first gas pressure level and a first gas temperature level of a gas in a vehicle tire at a first point in time, calculate a first value indicative of a gas amount contained in the tire at the first point in time, the first value being calculated in response to the first gas pressure level and the first gas temperature level, receive sensor data of a second gas pressure level and a second gas temperature level of the gas in the vehicle tire at a second point in time, the second point in time being subsequent to the first point in time, calculate a second value indicative of a gas amount contained in the tire at the second point in time, the second value being calculated in response to the second gas pressure level and the second gas temperature level, determine that a gas leakage is present in the vehicle tire in response to a difference between the first and second values being above a predetermined threshold limit, and transmit data to perform a responsive action in response to the determined gas leakage.

Example 2. The computer system of example 1, wherein the processing circuitry is configured to receive the sensor data at the second point in time at a predetermined time difference from the first point in time.

Example 3. The computer system of any one of examples 1 or 2, wherein the gas amount at the first point in time being a first number of gas molecules contained in the vehicle tire, and the gas amount at the second point in time being a second number of gas molecules contained in the vehicle tire.

Example 4. The computer system of any one of the preceding examples, wherein the processing circuitry is configured to determine that a gas leakage is present in the vehicle tire in response to the second value being lower than the first value by the predetermined threshold limit.

Example 5. The computer system of any one of the preceding examples, wherein the processing circuitry is configured to continuously receive the sensor data for a predetermined time period of operation of a vehicle provided with the vehicle tire.

Example 6. The computer system of example 5, wherein the second point in time is an instant point in time subsequent to the first point in time, the processing circuitry being configured to determine that the gas leakage is present in the vehicle tire in response to a sudden difference between the first and second values being above the predetermined threshold limit.

Example 7. The computer system of any one of the preceding examples, wherein the processing circuitry is configured to transmit a responsive action in the form of transmitting an alarm message to a display arranged inside a vehicle provided with the vehicle tire.

Example 8. The computer system of example 7, wherein the alarm message causes the display to indicate a maintenance event to the operator of the vehicle in response to the difference between the first and second values being within a first predetermined range above the predetermined threshold limit.

Example 9. The computer system of example 8, wherein the alarm message causes the display to indicate a vehicle stop event to the operator of the vehicle in response to the difference between the first and second values being above the first predetermined range above the predetermined threshold limit.

Example 10. A vehicle comprising the computer system of any of the preceding examples.

Example 11. The vehicle of example 10, wherein the sensor data is received from at least one sensor connected to the vehicle tire.

Example 12. The vehicle of example 11, wherein the at least one sensor is a pressure sensor and a temperature sensor.

Example 13. A computer-implemented method, comprising: determining, by processing circuitry of a computer system, a first gas pressure level and a first gas temperature level of a gas in a vehicle tire at a first point in time, calculating, by the processing circuitry, a first value indicative of a gas amount contained in the tire at the first point in time, the first value being calculated in response to the first gas pressure level and the first gas temperature level, determining, by the processing circuitry, a second gas pressure level and a second gas temperature level of the gas in the vehicle tire at a second point in time, the second point in time being subsequent to the first point in time, calculating, by the processing circuitry, a second value indicative of a gas amount contained in the tire at the second point in time, the second value being calculated in response to the second gas pressure level and the second gas temperature level, determining, by the processing circuitry, that a gas leakage is present in the vehicle tire in response to a difference between the first and second values being above a predetermined threshold limit, and transmitting, by the processing circuitry, data to perform a responsive action in response to the determined gas leakage.

Example 14. A computer program product comprising program code for performing, when executed by the processing circuitry, the method of example 13.

Example 15. A non-transitory computer-readable storage medium comprising instructions, which when executed by the processing circuitry, cause the processing circuitry to perform the method of example 13.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry configured to:

   - receive sensor data of a first gas pressure level and a first gas temperature level of a gas in a vehicle tire at a first point in time,
   - calculate a first value indicative of a gas amount contained in the tire at the first point in time, the first value being calculated in response to the first gas pressure level and the first gas temperature level,
   - receive sensor data of a second gas pressure level and a second gas temperature level of the gas in the vehicle tire at a second point in time, the second point in time being subsequent to the first point in time,
   - calculate a second value indicative of a gas amount contained in the tire at the second point in time, the second value being calculated in response to the second gas pressure level and the second gas temperature level,
   - determine that a gas leakage is present in the vehicle tire in response to a difference between the first and second values being above a predetermined threshold limit, and
   - transmit data to perform a responsive action in response to the determined gas leakage.

2. The computer system of claim 1, wherein the processing circuitry is configured to receive the sensor data at the second point in time at a predetermined time difference from the first point in time.

3. The computer system of any one of claims 1 or 2, wherein the gas amount at the first point in time being a first number of gas molecules contained in the vehicle tire, and the gas amount at the second point in time being a second number of gas molecules contained in the vehicle tire.

4. The computer system of any one of the preceding claims, wherein the processing circuitry is configured to determine that a gas leakage is present in the vehicle tire in response to the second value being lower than the first value by the predetermined threshold limit.

5. The computer system of any one of the preceding claims, wherein the processing circuitry is configured to continuously receive the sensor data for a predetermined time period of operation of a vehicle provided with the vehicle tire.

6. The computer system of claim 5, wherein the second point in time is an instant point in time subsequent to the first point in time, the processing circuitry being configured to determine that the gas leakage is present in the vehicle tire in response to a sudden difference between the first and second values being above the predetermined threshold limit.

7. The computer system of any one of the preceding claims, wherein the processing circuitry is configured to transmit a responsive action in the form of transmitting an alarm message to a display arranged inside a vehicle provided with the vehicle tire.

8. The computer system of claim 7, wherein the alarm message causes the display to indicate a maintenance event to the operator of the vehicle in response to the difference between the first and second values being within a first predetermined range above the predetermined threshold limit.

9. The computer system of claim 8, wherein the alarm message causes the display to indicate a vehicle stop event to the operator of the vehicle in response to the difference between the first and second values being above the first predetermined range above the predetermined threshold limit.

**10.** A vehicle comprising the computer system of any of the preceding claims.

**11.** The vehicle of claim 10, wherein the sensor data is received from at least one sensor connected to the vehicle tire.

**12.** The vehicle of claim 11, wherein the at least one sensor is a pressure sensor and a temperature sensor.

**13.** A computer-implemented method, comprising:

- determining, by processing circuitry of a computer system, a first gas pressure level and a first gas temperature level of a gas in a vehicle tire at a first point in time,
- calculating, by the processing circuitry, a first value indicative of a gas amount contained in the tire at the first point in time, the first value being calculated in response to the first gas pressure level and the first gas temperature level,
- determining, by the processing circuitry, a second gas pressure level and a second gas temperature level of the gas in the vehicle tire at a second point in time, the second point in time being subsequent to the first point in time,
- calculating, by the processing circuitry, a second value indicative of a gas amount contained in the tire at the second point in time, the second value being calculated in response to the second gas pressure level and the second gas temperature level,
- determining, by the processing circuitry, that a gas leakage is present in the vehicle tire in response to a difference between the first and second values being above a predetermined threshold limit, and
- transmitting, by the processing circuitry, data to perform a responsive action in response to the determined gas leakage.

**14.** A computer program product comprising program code for performing, when executed by the processing circuitry, the method of claim 13.

**15.** A non-transitory computer-readable storage medium comprising instructions, which when executed by the processing circuitry, cause the processing circuitry to perform the method of claim 13.

*Fig. 1*

Fig. 2

Fig. 3

**Fig 4**

500

502

504

506

508 512

510 516 518

514 520

522

524

526

Europäisches
Patentamt

European
Patent Office

Office européen
des brevets

# EUROPEAN SEARCH REPORT

Application Number

EP 23 20 7997

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/229235 A1 (SAINT-LOUP PHILIPPE [FR] ET AL) 11 August 2016 (2016-08-11) * paragraph [0047] - paragraph [0066]; figures 1-3 * | 1-6, 10-15 | INV. B60C23/04 |
| X | US 10 675 925 B1 (OAKES III CHARLES LEE [US] ET AL) 9 June 2020 (2020-06-09) * column 3 - column 5; figures 1-3 * | 1,7-15 | |
| X | EP 3 042 793 B1 (SUNG JUNG MINUTE IND CO LTD [TW]) 31 May 2017 (2017-05-31) * paragraph [0020] - paragraph [0043]; figures 1-4 * | 1 | |
| X | FR 2 680 135 A1 (MICHELIN & CIE [FR]) 12 February 1993 (1993-02-12) * page 2 - page 6; figure 2 * | 1 | |

TECHNICAL FIELDS
SEARCHED      (IPC)

B60C

The present search report has been drawn up for all claims

| Place of search | Date of completion of the search | Examiner |
|---|---|---|
| Munich | 6 March 2024 | Billen, Karl |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO FORM 1503 03.82 (P04C01)

## ANNEX TO THE EUROPEAN SEARCH REPORT
## ON EUROPEAN PATENT APPLICATION NO.

EP 23 20 7997

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2024

| Patent document cited in search report | | Publication date | Patent family member(s) | | Publication date |
|---|---|---|---|---|---|
| US 2016229235 | A1 | 11-08-2016 | EP | 3049260 A1 | 03-08-2016 |
| | | | FR | 3011200 A1 | 03-04-2015 |
| | | | JP | 2016537228 A | 01-12-2016 |
| | | | US | 2016229235 A1 | 11-08-2016 |
| | | | WO | 2015044553 A1 | 02-04-2015 |
| US 10675925 | B1 | 09-06-2020 | US | 10675925 B1 | 09-06-2020 |
| | | | US | 11440358 B1 | 13-09-2022 |
| | | | US | 11912073 B1 | 27-02-2024 |
| EP 3042793 | B1 | 31-05-2017 | NONE | | |
| FR 2680135 | A1 | 12-02-1993 | EP | 0551495 A1 | 21-07-1993 |
| | | | FR | 2680135 A1 | 12-02-1993 |
| | | | JP | H06501903 A | 03-03-1994 |
| | | | WO | 9302875 A1 | 18-02-1993 |

EPO FORM P0459

For more details about this annex : see Official Journal of the European Patent Office, No. 12/82